# EUROPEAN PATENT APPLICATION

(11) **EP 1 278 147 A1**
(43) Date of publication of application: **22.01.2003**
(21) Application number: 02077773.6
(22) Date of filing: 08.07.2002
(51) Int. Cl.: G06F 17/60

(54) **System for controlling and monitoring a process**

(30) Priority: 19.07.2001 EP 01202761
(71) Applicant: Océ-Technologies B.V., 5914 CC Venlo (NL)
(72) Inventor: Breunese, Arnold Pieter Jan, 5914 SH Venlo (NL)
(74) Representative: Van de Sande, J.H.A.W.

(57) **Abstract**

A system for controlling and monitoring a process performed by one or more actors characterised by roles, wherein the process is associated with a complex object, e.g. a document, in which constituent objects, e.g. chapters, can be distinguished. The system comprises means for defining and storing models of the complex object and of the process, wherein the process consists of actions, means for creating action-object combinations, for linking roles to actions, for establishing whether an action-object combination is ready to be executed, and means for making executable action-object combinations available to actors with the appropriate role. The system models the complex object in a hierarchical multi-layered tree structure of constituent objects, in which parent objects have children in a lower layer. A programmable processing device comprises one or more of the components of the system. A computer program, when run on a computer, turns the computer into such a programmable processing device.

## Description

The invention relates to a system for controlling and monitoring a process performed by one or more actors characterised by roles, wherein the process is associated with a complex object, e.g. a document, in which constituent objects, e.g. chapters, can be distinguished, and wherein the system comprises
- means for defining and storing a model of the complex object;
- means for defining and storing an abstract model of the process, wherein the process consists of actions;
- means for creating action-object combinations;
- means for linking roles to actions;
- means for establishing whether an action-object combination is ready to be executed; and
- means for making executable action-object combinations avail-able to actors with the appropriate role.

Such a system is known from Sarin et al., "A process model and system for supporting collaborative work", *SIGOIS* bulletin, 2 2/3, p. 213-224. This system supports the definition, execution, monitoring, and dynamic modification of organisational processes, and is implemented as an object-oriented network service.

The known system can only process a complex object by dividing it into many small objects. Choosing an appropriate granularity is left to the user. Sarin suggests decomposing the complex object into as many smaller objects as possible, to increase the fineness of concurrency. This would, however, impose a burden on the known system, as it would have to maintain state information about many small objects.

It is an object of the invention to provide a system wherein complex objects can be processed in an effective and efficient way.

Accordingly, the system according to the invention is characterised in that the complex object is modelled in a hierarchical multi-layered tree structure of constituent objects, in which parent objects have children in a lower layer.

Thus, not only is the process model decomposed into actions, but the complex object is also decomposed in an intelligent way into constituent objects, which are combined with the actions. The system according to the invention therefore allows actions on parts of the complex object to be performed simultaneously instead of sequentially, leading to a more efficient use of available resources.

In the preferred embodiment of the system according to the invention, the complex object and its constituent objects have attributes, and the system comprises means for automatically changing the attributes of all child and parent objects of an object, when an attribute of the object affecting the attributes of the child and parent objects is changed in an action performed on the object. Thus, a change in the attributes of one objects automatically leads to a propagation of attribute changes through the hierarchical multi-layered tree structure, for example when actions on all the constituent objects of a composite object have been completed.

The known system requires the user to assign actions to objects, thus creating a task in a process. Although templates can be used, creation of an active job requires associating appropriate objects with the job where object names have been defined but not bound in the job template.

The invention provides a system wherein the means for defining the process require little effort on the part of the user of the system. In the system according to the invention, the complex object and its constituent objects have an object type, and the means for defining a process model comprise means for associating an object type with an action.

Thus, thanks to this object-centred approach, a user need only define the object model and process model. The system will automatically link the objects in the object model to the appropriate tasks. Both object model and process model can be used again, saving the user time and effort.

The invention will now be explained in further detail with reference to the attached drawings of which
- Fig. 1: schematically shows an example of a system according to the invention, as used to create a document, e.g. a product manual,
- Fig. 2: schematically shows an example of a model of a product manual, for use in the system of Fig. 1,
- Fig. 3: schematically shows an example of a database for defining and storing a model of the complex object in an embodiment of the system according to the invention.
- Fig. 4: schematically shows an example of an abstract model of a process, appropriate for use with the object model of Fig. 2 in the system of Fig. 1,
- Fig. 5: schematically shows an example of a database, comprised in an embodiment of the invention, for defining and storing an abstract model of the process.
- Fig. 6: schematically shows an example of a flow chart, describing various phases, which the system according to the invention can go through.

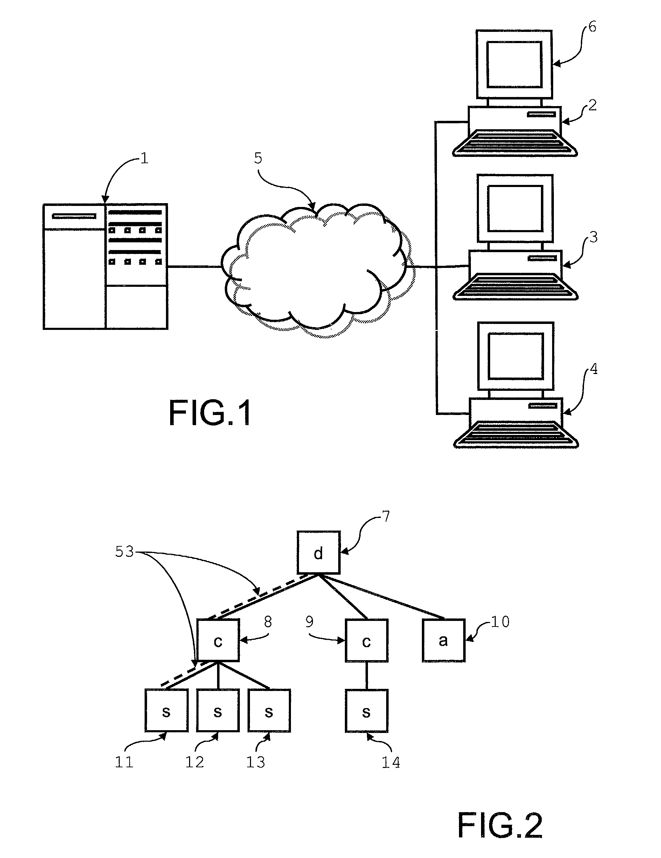

Fig. 1 schematically shows an embodiment of a system according to the invention, as used to control and monitor the creation of a document, for example a product manual. It comprises a server 1 and three computers 2-4, which are interconnected through a network 5. Each computer 2-4 comprises a monitor 6 and the usual other components, such as a keyboard, mouse, storage medium, etc. The network 5 might be a LAN, a company's intranet, or the internet. It is not essential to the invention that there be three computers 2-4 or that it comprise a server 1. Processes on the server 1 could be carried out on one or more of the computers 2-4. The whole configuration is provided purely as an example.

Nevertheless, the configuration with computers 2-4 connected to a server 1 through a network 5 does provide several advantages. In a preferred embodiment of the system, information pertaining to the object(s) and the process is stored in databases in the server 1. Information about the progress of the process can then be accessed at all times using one of the computers 2-4. If the process is the creation of an electronic document, one copy, accessible by each computer user, can be kept in the server 1.

A preferred embodiment of the system makes use of web-technology to provide the users of the computers 2-4 with access to the system. Tasks or information can be sent to them by e-mail, or they can retrieve the information they need using a browser.

In another embodiment of the system, several other computer programs are integrated into the system. It is useful to integrate word processors if the process monitored by the system is the creation of an electronic document, for example.

The users of the computers 2-4 each play one or more specific roles in the creation of the document, according to their particular skills and resources. For example, the user of the first computer 2 might be a manager, overseeing the whole process. The user of the second computer 3 might be a technical writer, whereas the user of the third computer 4 might be a development engineer, responsible for the development of the product described in the document.

Each of these actors is involved at different stages in the process. In a typical large organisation they will not be in daily contact with each other, so it is important that a system like that of the invention controls and monitors the progress of the process and the results of the activities of the actors.

The process needs to be defined, before the system can be used to control and monitor it. The manager of the process could, for example, enter the definition of the process into the system, using the first computer 2. A definition of a process comprises three main elements: a model of the object involved in the process, an abstract model of the process, and the actors involved in carrying out the process.

Fig. 2 schematically shows a model of a product manual, as an example of an object model for use in the system of Fig. 1. The manual is a composite object, as it consists of a number of other objects, such as chapters, sections and appendices. The model of the manual reflects the composite nature of the object by modelling it in a hierarchical multi-layered tree structure, in which parent objects in one layer have child objects in a lower layer.

At the top of the structure is a document 7. This represents the entire manual. The document 7 comprises two chapters 8,9 and an appendix 10. Chapter one 8 comprises three sections 11-13, whereas chapter two 9 comprises one section 14. Of course, a real product manual would have a much more complex structure, with more chapters and sections and maybe sub-sections, but this example suffices to illustrate the principles of the invention.

Each of the objects 7-14 is an instance of an object type. A type defines a structure common to all objects that are instances of that type. For example, all chapters 8,9 are instances of the type 'chapter'. They have the same kinds of attributes and a common set of possible states they can be in. One of the purposes of assigning a type to each object is to define its position in the object model. For example, all chapters 8,9 are placed on a level below that of the document 7, but above that of the sections 11-14. Another purpose of assigning a type is to make it easier to create new objects. A third chapter would merely be another instance of the type 'chapter'. If a third chapter needs to be written, it will automatically receive all the attributes common to the existing chapters 8,9, although the attributes will have different values to start with.

Each of the objects 7-14 has certain attributes associated with it and, optionally, in case of a manual for example, information content. The information content of an abstract object, like the document 7, will be quite significant. The information content of one of the sections 11-14 comprises text and illustrations. The information content can be stored in the system, for example in the server 1. In this way, the actors can access the content through their computer 2-4, when they need to modify the information content during the process.

The attributes define the state of an object. Attributes defining the state of an object could for instance be used to indicate whether an object is currently being processed, whether it is finished, or whether work on it has yet to be started. Other attributes will bear a relation to the process, in which the object is involved, for example indicating whether the illustrations have been included in the chapter, whether it has been checked for errors, etc.

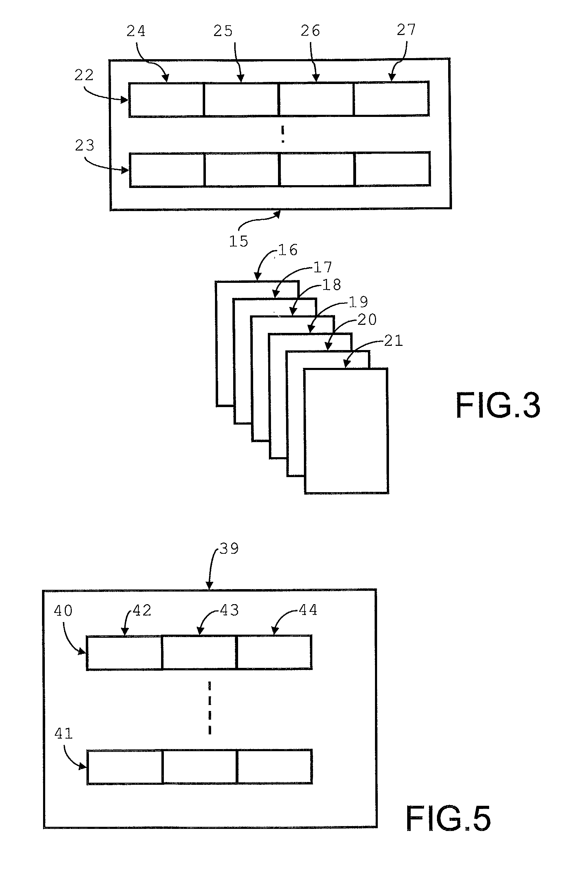

The system according to the invention uses a database to define and store the model of the document 7. Fig. 3 shows an object model database 15. Content files 16-21 are used to store the information content of the document 7. The object model database 15 contains records 22-23, one for each object in the model of the document 7.

A record comprises fields 24-27 defining the characteristics of each object. One of these fields 24-27 is an identifier field 24, unique to the object. Another field will be a type field 25, defining the object's type. An inheritance field 26 will describe the object's relation to other objects and comprise rules for updating shared attributes. For example, the contents of the inheritance field 26 in the record for chapter one 8 will indicate that it is the parent of sections one to three 11-13, that it is the child of the document 7, and that the information content of chapter one 8 is the aggregate of the contents of sections one to three 11-13. It is a real advantage of the invention that it is not necessary to store multiple copies of the information content of each object. The record for chapter one 8 will contain pointers to content files 16-21, which contain the contents of the three sections. The record defining section one of chapter one 11 will contain a pointer to only one content file 16. An attribute field 27 defines and stores the object's attributes, defining its state.

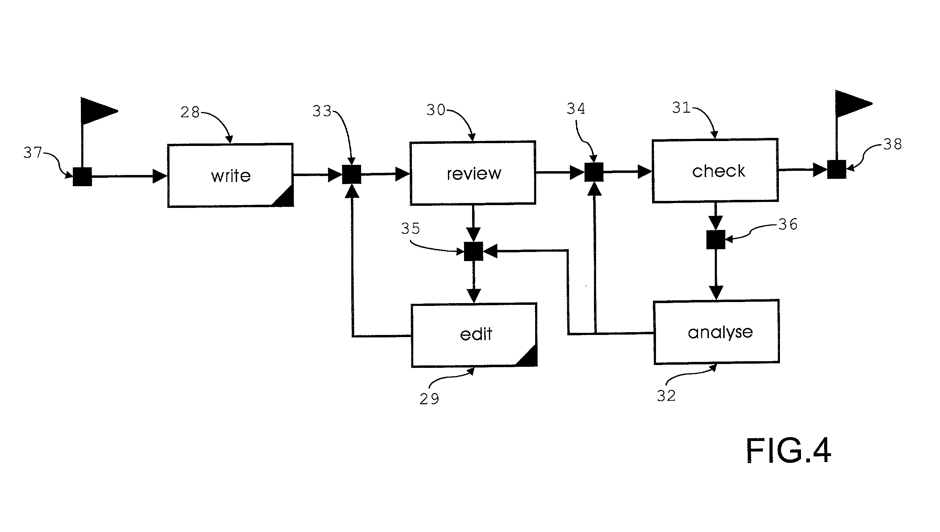

The second element in the definition of the process is a definition of an abstract model of the process. Fig. 4 shows an example of an abstract model of a process, as could be defined using the system of Fig. 1. The process features in the creation of a document, for example the document 7 of Fig. 2.

An abstract process model, such as that of Fig. 4, consists of actions 28-32 and states 33-36. An object type is associated with each action 28-32. When the action is performed on an object of this type, one or more of its attributes are changed. The object thus moves from one state to another. The states 33-36 allow effective monitoring of the process. By inspecting an object's state, it is possible to determine whether certain actions have been performed on it.

The abstract process model further comprises exactly one initial state 37 and a final state 38. There can be several final states in an abstract process model, but only one initial state, since object must be clearly defined at the start of the process.

In the preferred embodiment, there are two kinds of actions. One kind of action results in a predefined modification of one or more attributes of the object on which the action is performed. This kind of action modifies the information content of an object. In Fig. 4, two actions of this kind are present, to wit a writing action 28 and an editing action 29. These actions 28,29 result in exactly one predefined state. The writing action 28 results in an object in a 'draft' state 33, as does the editing action 29. Of course, these actions 28,29 can result in one of any number of possible modifications of the object's information content.

The other kind of action results in one of a number of possible modifications to one or more attributes of an object on which the action is performed. As a result of these actions, the state of an object can change to one of a number of possible states. Three examples of such actions are provided in Fig. 4. The process model comprises a reviewing action 30, which moves an object from the 'draft' state 33 to a 'beta' state 34, or to a 'rejected-1' state 35. The model further comprises a checking action 31, which changes an object from the 'beta' state to a 'rejected-2' state 36, or to the final state 38, depending on whether the information content of the object contains errors. There is also an analysis action 32, which changes the state of an object from the 'rejected-2' state 36 to either the 'beta' state 34 or the 'rejected-1' state. If the analysis action 32 has determined that the object is in need of further editing, the 'rejected-1' state 35 will be the outcome. If the object needs to be checked again, the 'beta' state 34 will be the result. In other words, this kind of action has a discrete number of possible outcomes, with corresponding states.

Actions also have an associated object type. For example, the writing action 28 could have the object type 'section' associated with it. The association of object types to actions makes concurrency possible when the actions are performed on real objects. The writing action 28 could be performed on section one of chapter one 11 and on section two of chapter one 12 at the same time, providing there are sufficient resources. Meanwhile, the editing action 29 could be performed on section three of chapter one 13. If the type 'chapter' were associated with the writing action 28, then this would not be possible, since two actions cannot be performed on the same object simultaneously. It is not possible to perform the writing action 28 and the editing action 29 on chapter one 8 simultaneously, because this would lead to conflicts or different versions of the information content.

Actions have roles associated with them. These represent the resources needed to perform the action on an object. The system according to the invention also makes action-object combinations available to the actors. The roles associated with the actions are the means that enable it to do so effectively.

The states 33-36 can be used as checkpoints, for when the process is performed on an actual object. An object will pass between two consecutive actions, when it is in the appropriate state, as defined by the values of its attributes. In a preferred embodiment of the invention, the system is capable of optimising the abstract model of the process, in order to maximise the number of actions that are performed in parallel. To do this, it rearranges the connections between tasks, in order to create as many parallel branches in the process model as possible. The method used to optimise the abstract model of the process is described in more detail in a co-pending application, "Method for creating an optimal workflow" by the same applicant.

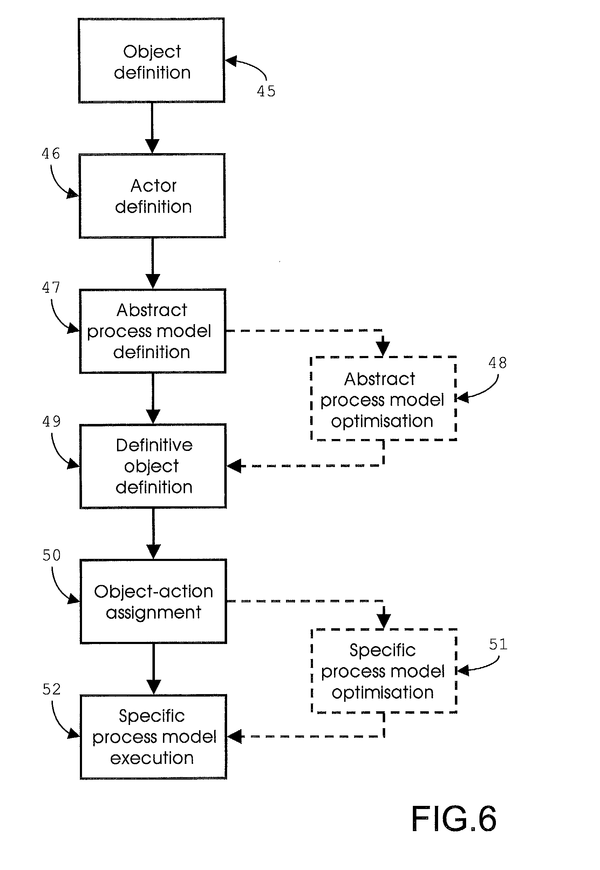

The system defines and stores the abstract model of the process in an abstract process model database 39, schematically represented in Fig. 5. The database 39 comprises records 40,41 for each action. The record 40,41 comprises an action definition field 42, an object type field 43 and a role field 44. The action definition field 42 defines the action. It can contain an identifier for the action, i.e. its name, details on how it modifies an object's attributes, and a pointer to software involved in the action. The object type field 43 defines the type of object that the action can be associated with. The role field 44 determines to whom the action can be assigned.

The third element in the definition of the process comprises the actors. They are the resources, human or otherwise, for carrying out actions on objects. In the system of Fig. 1 the main actors are human, but in a different process, for example the assembly of a product or a process in a computer system, the actors can be machine components or methods in a computer program.

Actors are characterised by roles, which correspond to the roles that are associated with actions in the abstract model of the process, described above. The system only makes action-object combinations available to actors with the appropriate role.

The (human) actors, who make use of the system of Fig. 1, can for instance have the roles 'writer', 'analyst', or 'supervisor'. 'Writer' would then be the role associated with the writing action 28, 'supervisor' the role associated with the checking action 31. Software methods can also be actors in the creation of a document 7, for example taking care of the lay-out of pages. An actor can have more than one role, and several actors can have the same role.

The functioning of the system will now be explained in more detail with reference to the flow chart depicted in Fig. 6. It contains some of the more important phases that occur in the use of the system according to the invention.

The first three phases 45-47 comprise the definition of the process. They have already been explained above. During these phases 45-47, the system requires input from the user. It is worth pointing out that the object definition phase 45 need not comprise a complete and definitive definition of the entire structure of objects. A definition of the type structure, wherein one instance of each object type is defined, would suffice. It is important that all the types and attributes be defined with their appropriate values, in order that an actor definition phase 46 and an abstract process model definition phase 47 can be completed.

As explained, the preferred embodiment of the system according to the invention comprises an optional abstract process model optimisation phase 48. If the instances of each object type have not all been defined in the object definition phase 45, then the system will go through a definitive object definition phase 49.

A specific process model can be created next in an object-action assignment phase 50. The system comprises means for automatically establishing a link between objects and actions, according to whether the associated object types match.

The system comprises a third database, not shown separately, to define and store the specific process model. It is created in this phase, by making copies of the records 40,41 in the abstract process model database 39 for each instance of an object of the type defined in the object type field 43. Extra fields can be added to the records during creation, for example for storing actors' comments. Each record in the resultant database stores the details of one object-action combination. The third database is thus very similar to the abstract process model database 39 in that the records are structured in the same way, but it is larger in size.

The object-centred approach at the basis of the system according to the invention gives it certain advantages not shown in the prior art. Each object is separately linked to an action, through its own copy of the records 40, 41 in the third database. When a series of consecutive actions is defined in the abstract process model for a certain object type, independent series of action-object combinations will be made in the system. Because these series are independent of one another, the objects on which the actions operate can be in different states at any one time. This leads to a more efficient use of resources, especially if there are few actors with the appropriate role for one of the actions. Bottlenecks during execution are prevented.

In a preferred embodiment, the system also comprises means for optimising the specific object process model created in the object-action assignment phase 50. These means make use of further features of the method for optimising a workflow that is described in the co-pending application by the same applicant. The resulting specific object process model is optimised to enable as many object-action combinations to be executed in parallel as is possible.

The system then moves into a specific object process execution phase 52, the last phase in Fig. 6, wherein executable action-object combinations are made available to actors with the appropriate role. The system first assigns action-object combinations to actors or presents actors with a list of action-object combinations from which they can elect to execute one. This aspect of the system can have various features within the spirit of the invention. For example, a feature that allows actors to lay a claim on future action-object combinations is conceivable. A further feature that allows actors to return, refuse or pass on to another actor a received or claimed action-object combination is also possible. The system of Fig. 1 could comprise a warning mechanism, to alert actors to urgent action-object combinations that have not yet been started upon. A similar mechanism could alert actors if one action threatens to hold up the entire process.

After execution, the system updates the stored models and attributes. It then presents new action-object combinations, of which the execution has now become possible, to actors, or assigns them automatically.

When making action-object combinations available, the system takes account of the roles of the actors. Only actors with the appropriate role are presented a list of executable action-object combinations on the monitor 6 of their computer 2-4, for example. When a software method is the appropriate actor, the action-object combination can be executed automatically on the server 1 or one of the computers 2-4, without human involvement.

It is also possible to define additional rules for making action-object combinations available to actors. For example, a rule can be defined to prevent the reviewing of chapter one 8 by the actors who wrote the sections 11-13 of that chapter.

The system only makes action-object combinations available, when the object concerned is in the appropriate state leading to the task in the process model. The object will only pass to the action if its attributes have the appropriate values. The system also performs a check of the objects that directly descend from the object concerned or from which it is directly descended. Two objects that lie on a direct line from the object at the top of the hierarchical tree structure of constituent objects to an object in the lowest layer of the hierarchy cannot simultaneously be involved in separate actions. This is a consequence of the fact that the attributes of child and parent can affect each other. Ambiguity might otherwise arise.

As an example, different actions on section one of chapter one 11 and on chapter one 8 cannot be performed simultaneously, because these objects 8,11 lie on a direct line 53 from the document 7 to section one of chapter one 11 in the object model of Fig. 2. It is clear that chapter one 8 cannot meaningfully go through the reviewing action 30, when the writing action 28 is simultaneously being performed on section one of chapter one 11.

When an actor starts execution of an action-object combination, the system blocks performance of actions on parent or child objects, by removing the action-object combinations involving these objects from the lists presented to the actors.

After the action has been performed on the object, values of attributes are changed, so that it will be in the appropriate state for starting a next action. In addition, the system automatically updates relevant attributes of parent and child objects and changes their states. For example, when all the sections 11-13 of chapter one 8 have been written, the state of chapter one 8 will also change to 'draft'. Chapter one 8 can then pass to the reviewing action 30, if this action 30 has the type 'chapter' associated with it. Thus a change in the attributes of all child and parent objects of an object is automatically effected, when an attribute of the object affecting the attributes of the child and parent objects is changed in an action performed on that object. There is a propagation of attribute changes through the hierarchical multi-layered tree structure.

It is also feasible to allow actors to add comments to the attributes of the object, for example to draw the attention of other actors to an aspect. This would be especially useful at the end of a reviewing action, if parts of the document 7 need to be rewritten. In addition, the system could allow the existence of several versions of an object. It might be useful to keep copies of older versions of the document 7, for instance. The system can then comprise a mechanism for ensuring that no one inadvertently starts work on an outdated version of an object.

A further optional feature of the system can be a time-keeping system, to automatically record how much time was taken to complete an action on an object. This information could be used to distribute future similar action-object combinations more efficiently, to assess the performance of the actors, or to gain an accurate idea of the cost of different actions. Other records of used resources, financial or otherwise, could also be kept by the system according to the invention.

The invention is not limited to the above-described embodiments, which can be varied in a number of ways within the scope of the claims. For example, the system need not necessarily take the shape of a network of computers, but could instead consist of only one computer, possibly an embedded processor in a device. Also, the order of definition of actors, object and abstract process model can be slightly varied or these phases can occur simultaneously.

## Claims

1. System for controlling and monitoring a process performed by one or more actors **characterised by** roles, wherein the process is associated with a complex object (7), e.g. a document, in which constituent objects, e.g. chapters, can be distinguished, and wherein the system comprises
- means (1-4,15) for defining and storing a model of the complex object (7);
- means (1-4,39) for defining and storing an abstract model of the process, wherein the process consists of actions (28-32);
- means (1-4) for creating action-object combinations;
- means (1-4) for linking roles to actions (28-32);
- means (1-4) for establishing whether an action-object combination is ready to be executed; and
- means (2-4,6) for making executable action-object combinations available to actors with the appropriate role, **characterised in that** the complex object (7) is modelled in a hierarchical multi-layered tree structure of constituent objects (8-14), in which parent objects have children in a lower layer.

2. System according to claim 1, wherein the complex object (7) and its constituent objects (8-14) have attributes, and the system comprises means (1-4,15) for automatically changing the attributes of all child and parent objects (7-14) of an object, when an attribute of the object affecting the attributes of the child and parent objects (7-14) is changed in an action performed on the object.

3. System according to claim 1 or 2, wherein the complex object (7) and its constituent objects (8-14) have an object type, and the means for defining an abstract model of the process comprise means for associating an object type with an action (28-32).

4. System according to claim 3, wherein the means for creating action-object combinations automatically establish a link between the complex object (7), or one of its constituent objects (8-14), and an action (28-32), according to the type of the object.

5. System according to any one of the preceding claims, wherein the means for establishing whether an action-object combination is ready to be executed, check whether no actions are currently being performed on the object or any objects from which it is descended or that descend from it.

6. System according to any one of the preceding claims, wherein the means for establishing whether an action-object combination is ready to be executed, check whether the values for the attributes of the object are all appropriate to the action.

7. System according to any one of the preceding claims, wherein the process comprises actions (28-29) that result in a pre-defined modification of one or more attributes of the object on which the action is performed.

8. System according to any one of the preceding claims, wherein the process comprises actions (30-32) that result in one of a number of possible modifications to one or more attributes of the object on which the action is performed.

9. Programmable processing device (1-4) comprising one or more of the components of a system according to any one of the preceding claims.

10. Computer program capable of running on a computer (1-4), so that the computer running this program is capable of or adapted to assuming the role of the programmable processing device of claim 9.
